# EUROPEAN PATENT APPLICATION

(11) **EP 3 929 163 A1**
(43) Date of publication of application: **29.12.2021**
(21) Application number: 20305704.7
(22) Date of filing: 25.06.2020
(51) Int. Cl.: C02F 11/06, C02F 11/18, C02F 11/12, C02F 11/04, C02F 11/10, C02F 101/20, C02F 101/30

(54) **SELECTIVE REMOVAL OF MICRO-CONTAMINANTS FROM SLUDGE**

(71) Applicant: SUEZ Groupe, 92040 Paris la Défense Cedex (FR)
(72) Inventor: PARDO, Pierre-Emmanuel, 91400 ORSAY (FR); DONNAZ, Sylvain, 78550 RICHEBOURG (FR); GONZALEZ OSPINA, Adriana, 78360 MONTESSON (FR)
(74) Representative: Marks & Clerk France

(57) **Abstract**

The invention relates to a method for selectively removing micro-contaminants from sludge, said method comprising:
a) Providing sludge (10) contaminated with micro-contaminants, and
b) Subjecting said sludge (10) to a primary treatment step, thereby producing a first stream (11) of primary sludge (12) comprising a first part (13) of micro-contaminants and a second stream (21) of remaining sludge (22) comprising a second part (23) of micro-contaminants,
c) Subjecting the second stream (21) of remaining sludge (22) to a secondary treatment step, thereby producing biological sludge (24),
wherein the first stream (11) of primary sludge (12) and the biological sludge (24) are further subjected to separate treatment steps whose effects are coupled, so as to divert, capture and destroy the first part of micro-contaminants in the primary treatment step.

## Description

The invention relates to the treatment of wastewater and more particularly of sludge from wastewater treatment plants.

### TECHNOLOGICAL BACKGROUND

Wastewater treatment plants (WWTPs) are the main transfer pathways for micro-pollutants to enter the environment. These micro-pollutants are of growing concern because of their associated health risks and potential adverse effects to aquatic and terrestrial ecosystems.

Even if WWTPs are not specifically designed to treat micro-pollutants, a wide range of said micro-pollutants are removed from wastewater essentially by biological degradation and sorption onto sludge during the secondary treatment, the latter mechanism being the main pathway for removal of these compounds. However, the sludge ready for disposal produced in wastewater treatment plants is then contaminated with at least part of the micro-pollutants initially present in water, as conventional processes are not able to remove them to an acceptable level.

Subsequent disposal of sludge includes land application, incineration and landfilling. In Europe, and especially in France, agricultural valuation by land spreading represents the main outlet of sludge disposal and the presence of trace concentrations of micro-pollutants, in particular organic micro-pollutants, could limit this type of sludge valorization. Although there is a French standard governing land application of sludge (NF U 44-041) to improve sludge quality monitoring, there remains some uncertainty about the risks associated with the presence of micro-pollutants such as pharmaceutical active ingredients in sludge used as soil amendment. In the United States of America (US), the beneficial reuse of biosolids through land application is governed by the Environmental Protection Agency (EPA), more specifically through the EPA's CFR 40 Part 503 rule for biosolids. This regulation is widely accepted as one of the most stringent requirement on biosolids quality and application, and as such, several other jurisdictions outside the US have either adopted it or a variant of it. Within the part 503 rule, definition of quality of biosolids is classified into two categories: Class A Biosolids; and Class B Biosolids. While said regulation defines authorized contents for chemical contaminants such as heavy metals, enhancements of anaerobic digestion (AD) processes and digestion are focused on meeting the requirements regarding biological contaminants such as pathogen and vector attraction reductions. As a result, risks associated with the presence of micro-pollutants in the produced sludge ready for disposal has yet to be assessed.

Indeed, the fate and distribution of some pharmaceutical active ingredients during sewage and/or sludge chemical (liming) or biological (anaerobic digestion) treatment were studied, and it was confirmed that neither sludge liming nor anaerobic digestion led to a complete removal of said micro-pollutants. Indeed, after said chemical or biological treatments, the phase distribution of compounds between the particulate and soluble sludge fractions showed that some pharmaceutical active ingredients remained adsorbed into the particular fraction of the sludge and others were solubilized into the water fraction. They could thus be potentially more available for soils after sludge land spreading, or could increase the micro-pollutants load going into the mainstream treatment line if the liquid fraction of the sludge treatment line is recycled to headworks.

The current state-of-the-art for advanced sludge treatment presents two main solutions, which represent 98% of the market solution adopted today.

The first solution consists in treating sludge through Anaerobic Digestion solutions: primary sludge and secondary biological sludge are mixed together where "mixed sludge" is treated through Mesophilic Anaerobic Digestion (MAD) alone or Thermophilic Anaerobic Digestion (TAD) or MAD + Thermal Hydrolysis Process (THP) or 2-Phase Anaerobic Digestion (2PAD). The problem of this first solution is that these processes, through the volatile solids removal and reduction of sludge volume, generate a concentration phenomenon of the micro-pollutants within the digested sludge. This truly prevents the destruction of micro-pollutants if no incineration nor HTG (pyrolysis/gasification) is implemented. Worse, it created Class A biosolids usually used in agriculture or land-spreading that are concentrated with micro-pollutants.

The second solution consists in treating sludge through sludge incineration solution: primary sludge and secondary biological sludge are mixed together where "mixed sludge" is treated through sludge incineration furnace alone or MAD + sludge incineration. All existing state-of-the-art solutions implement blending of primary and biological sludge resulting into a mixed sludge that is later processes downstream through advanced sludge treatment processes as described here above. Some specific treatment lines have been implemented for Class A Biosolids applications, where primary sludge and biological sludge are segregated before being mixed again prior to Anaerobic Digestion. Those applications use the diversion of primary sludge to Pasteurization system and the biological sludge to THP to lower and optimize the size of the THP unit while keeping the Pathogen Free accreditation (Class A) by pasteurizing the primary sludge. Then, hydrolyzed and pasteurized sludge are mixed again before being treated through Anaerobic Digestion. In these specific cases, "good sludge (biological)" are mixed again with "bad sludge (primary)" to inject mixed sludge to Digestion process.

Other conventional sludge treatment processes have no primary treatment stage, and therefore produce only biological sludge. In this case, mixed sludge is replaced by biological sludge only. In such case, micro-pollutants, adsorbed onto the primary sludge in the other scenarios, are adsorbed onto the biological sludge that then contains the major micro-pollutants content.

As a result, the solutions proposed in the prior art have the drawback of concentrating micro-pollutants originated from the raw water, primary sludge, biological sludge or mixed sludge into the final sludge ready for disposal. Depending on the considered treatment, the energy consumption of WWTPs may also increase. Additionally, the current state-of-the-art regarding micro-pollutants deals only with micropollution removal in the waterline.

To reduce this "micro-pollution" from the wastewater, some tertiary technologies are now validated and added to the mainstream treatment. Current state-of-the-art treatments of micropollutants generally consist in applying water treatment solutions on the tertiary stage of the mainstream waterline, through Adsorption Contactors (CAP, PAC...), Advanced Oxidation Processes (Ozone, H2O2/UV...), Membranes (MF, NF, UF, RO), additional energy. More specifically, for hydrophilic micro-pollutants, the most relevant technologies are chemical oxidation (like ozonation or AOP process) or adsorption using for instance granular or powdered activated carbons. All of these specific treatments all significantly add to the global energy consumption of the treatment plant.

For microplastics removal, treatments generally include a physical removal step such as filtration, or an adsorption step onto the sludge.

Said tertiary treatments are useful to maximize the phenomena observed into the secondary treatment, but result in the production of an excess of tertiary sludge to be treated, said excess sludge being contaminated by said micro-pollutants and/or microplastics.

The same problems arise in the treatment of organic waste, which also produces sludge contaminated with micro-pollutants, and in particular microplastics.

Also, sludge produced in drinking water plants may be contaminated by micro-pollutants, and especially by microplastics.

While scientific, professionals and project developers start to implement solutions for treating micropollutants (also called Compounds of Emerging Concern, or CECs) in the water stream (tertiary and secondary treatment stages) or waterline; there is still a gap to design and implement solutions that:
- deal with the removal of micropollutants in the sludge stream (or sludge line);
- combine the removal of micropollutants both in water and sludge streams;
- lower the energy consumption due to micropollutants additional treatment;
- improve the energy balance of the entire WWTP by treating micropollutants while boosting the production of energy (heat, biogas, biomethane).

There is thus a need for providing a method for treating wastewater, which would limit or even avoid production of sludge contaminated by micro-pollutants and/or microplastics, to allow a safe use of sludge as a material for circular economy. In particular, there is a need for a method for removing micro-pollutants and/or microplastics from a contaminated wastewater, while allowing to produce biogas and/or biomethane production (a "green" source of energy), and/or production of a safe sludge, advantageously suitable for land application ("back to the land" policy).

### SUMMARY

The invention allows dealing with further micro-pollution removal in the sludge by keeping the return to the soils of much greener biosolids than the treatments proposed in the prior art.

The present invention thus provides a method for selectively removing micro-pollutants from sludge combining the effects of two separate treatments, *i.e.* incineration and a combination of thermal treatment with anaerobic digestion, while producing biogas and/or methane and a solid product free of micro-pollutants and microplastics, advantageously suitable for land application.

In the following, only the term "micro-contaminant" is used to designate the micro-pollution constituted by micro-pollutants and/or microplastics. Therefore, the term "micro-contaminant" is to be understood as micro-pollutants and/or microplastics.

As used herein, a "micro-pollutant" is understood as an undesirable substance detectable in the environment at very low concentration (microgram per liter or even nanogram per liter). This substance is toxic, persistent and has a bio-accumulative effect for the environment. Its presence is, at least in part, due to human activity (industrial processes, agricultural practices or daily activities) and may at these very low concentrations cause adverse effects on living organisms (or ecosystems) due to their toxicity, persistence and bioaccumulation. Many molecules with different chemical properties are concerned (more than 110 000 molecules are identified by European regulations, namely in European Directive on water 2000/60/CE), whether organic or mineral, biodegradable or not. Examples of such micro-pollutants are plasticizers, detergents, metals, hydrocarbons, pesticides, cosmetics, hormones, drugs, drug residues, or pharmaceutical residues. Micro-pollutants are particulate or not, generally of low molecular weight.

As used herein, a "microplastic" is understood as small particles of plastics, i.e. particles generally with a particle size of 5 mm or less, typically of 1 mm or less, or even of 333 µm or less. As such, they may not be removed from water using conventional techniques and their treatment requires specific expensive techniques. They may be considered as a specific type of micro-pollutants.

In the following, the term "micro-contaminant" will be used to refer jointly to microplastics and micro-pollutants.

As used herein, a material "free of micro-pollutants and microplastics" is understood as a material comprising only traces amounts of micro-pollutants and microplastics, that is to say in accordance with regulatory requirements dictated either by the client and/or the local legislation, advantageously below regulatory requirements and/or below the detection limit. It is to be noticed that some molecules are regulated and some others are not. The number of regulated micro-pollutants varies from one country to another. To date, there is no exhaustive list of micro-pollutants and microplastics. It makes it difficult to analyze targeted efforts.

As used herein, "sludge" is to be understood as organic wastes or sludge, and more particularly sludge from organic waste or drinking water or wastewater treatment plants.

Organic matter, organic material, or natural organic matter refers to the large source of carbon-based compounds found within natural and engineered, terrestrial and aquatic environments. It is matter composed of organic compounds that have come from the remains of organisms such as plants and living beings and their waste products in the environment. Organic molecules can also be made by chemical reactions that do not involve life. Basic structures are created from cellulose, tannin, cutin, and lignin, along with other various proteins, lipids, and carbohydrates.

As used herein, an "anaerobic treatment" is understood as anaerobic digestion, or fermentation, which may be considered as a partial anaerobic digestion. The anaerobic treatment step is typically carried out in an anaerobic tank. This treatment step can be carried out in different ways: in a single reactor or in several reactors in parallel or in series, at various temperatures: mesophilic (32-42 °C), thermophilic (50-62 °C) or a mixture of both.

"Fermentation" is a process well-known in the art and may be defined as a biological anaerobic process extracting energy from carbohydrates in the absence of oxygen, to produce small molecules (organic substrates), in particular RBCs, through the action of enzymes in particular. No CH₄ is produced, or only traces amounts. There are five main types of fermentation:
- Alcoholic Fermentation, yielding mainly ethanol,
- Lactic Acid Fermentation, yielding lactate,
- Propionic Acid Fermentation, yielding propionate,
- Butyric Acid / Butanol Fermentation, yielding butyrate and butanol,
- Mixed Acid Fermentation, yielding VFAs (mainly acetate, but also propionate, lactate, butyrate).

The fermentation process may be controlled by the retention time of the sludge into the anaerobic tank, temperature and pH in the anaerobic tank, as well as by the specific microbial population involved in the fermentation process (i.e. by the choice of microbial strains in the anaerobic tank).

Anaerobic digestion is a process involving microorganisms that break down biodegradable material in the absence of oxygen. This process produces a digestate and a gaseous fraction comprising methane, and typically consisting essentially of methane and CO₂, also called biogas.

Advantageously, the anaerobic digestion is a digestion of effluents containing soluble components only, in particular soluble carbon i.e. containing no more suspended solids. An optional dedicated anaerobic digestion may further take place, such as a UASB type (upflow anaerobic sludge blanket digestion), i.e. treating soluble carbon.

The anaerobic treatment is usually performed at pH conditions between 7,0 and 7,5, preferably between 7,0 and 7,2.

Conventionally, a "digestate" is the non-gaseous product of an anaerobic digestion, while the "fermentate" is the fermentation product. However, in the present invention, unless stated otherwise, the word "digestate" will encompass the non-gaseous product of the anaerobic treatment, that is, respectively a "conventional" digestate for a digestion, and a "fermentate" for a fermentation.

A digestate, and more specifically a fermentate comprises RBCs, and more particularly VFAs or other fermentation products such as lower alcohols - in particular of formula R-OH with R representing a saturated, linear or ramified C₁-C₄ hydrocarbon chain, notably ethanol or butanol - depending on the selected fermentation pathway.

"RBCs" or "readily biodegradable carbons" are well known from the person of skill in the art. They are for instance defined in "Activated Sludge Models ASM1, ASM2 and ASM3", edited by the IWA task group on mathematical modelling for design and operation of biological wastewater treatment, Henze et al (2000), ISBN 1 900222 24 8. Examples of readily biodegradable carbons are volatile fatty acids. RBCs may be generated by fermentation, for instance as in the unified fermentation and thickening (UFAT) process, disclosed in particular in US 6,387,264.

"VFAs" or "volatile fatty acids" are also known in the art. In particular, they include lower carboxylic acids, notably C₁-C₄ saturated, linear or ramified hydrocarbon chains substituted by a COOH group, such as acetic acid, lactic acid, advantageously acetic acid.

The Thermal Hydrolysis Process (THP) is a two-stage process combining highpressure boiling of waste or sludge followed by a rapid decompression. The THP generally operates between 120 and 170°C. This combined action sterilizes the sludge and makes it more biodegradable, which improves digestion performance. Sterilization destroys pathogens in the sludge resulting in it exceeding the stringent requirements for land application (agriculture).

The Hydrothermal Carbonization (HTC) is a thermochemical treatment of biomass in pressurized water at temperatures between 180 and 250 °C at or above saturated pressure.

Advantageously, a step of pre-dehydration takes place upstream the THP and HTC.

The invention, by separating the sludge to be treated into two streams after a primary stage, each being subjected to a separate treatment, *i.e* incineration on the one hand and thermal treatment and an anaerobic digestion on the other hand (the thermal treatment being positioned either up- or downstream the anaerobic digestion), and by coupling the products of these two separate treatments, provides the following advantages:
- Destroying the fraction of sludge that contains micro-contaminants (i.e. micro-pollutants and/or microplastics contaminants),
- Capturing the micropollutants/microplastics before subjecting the secondary stage to produce digested sludge without any micropollutants/microplastics,
- Reducing the overall amount of sludge that is produced, while maintaining the possibility for land application of sludge (typically class A sludge),
- Producing methane and/or biogas, which may be upgraded downstream for instance through electricity production, grid reinjection, liquefied natural gas (LNG) and compressed natural gas (CNG) production, etc.,
- Allowing for nutrient recovery (in particular phosphorus (P)) in the solid fraction produced after the thermal treatment step.

The invention therefore proposes a modern approach of municipal sludge processing using the concept of "divert, capture, recover". This new path does consist in solving solids and micro-pollution management by combining sustainable biosolids reuse for agriculture, maximizing biogas reuse and capturing/destroying micro-pollution through biosolids-to-energy incineration. This conceptual design for wastewater infrastructure emphasizes and leverages the best from the three main biosolids routes: renewable natural gas (RNG), renewable energy source (RES) and back to the soil in agriculture.

Fifteen years of R&D around the fate of micro-pollutants (also called Compounds of Emerging Concern: CEC) have led to the key understanding of its distribution and removal potential across water and sludge lines of wastewater treatment plants (WWTP). When 100% of micro-pollutants contained in raw water enter the WWTP (heavy metals, micro-pollutant, trace organic compounds, pathogens), 60% are adsorbed onto the primary sludge and 40% are transferred to waterline downstream. Among those 40%, 20% are stripped out to atmosphere or transformed by secondary biological treatment; the other 20% remained solubilized can be removed in the treated water through dedicated advanced tertiary treatment solutions. If the current development of micro-pollutant removal deals with the removal of the 40% in waterline; solution for removing 60% retained in the sludge still need to be implemented.

The method according to the invention consists in segregating the sludge line into two independent streams.

The first stream will be composed of primary sludge produced from biosorption, high load or primary settling tanks (conventional or chemically enhanced primary tank) where 60% of micro-pollution (generally from 20 to 80% depending on the type of compound) is adsorbed and carbon is redirected. Carbon recovery from primary sludge through anaerobic digestion (for example mesophilic anaerobic digestion MAD, but not limited to) will allow generating biogas while digested sludge will be eliminated together with the micro-pollution, through auto-thermal sludge furnace.

The second stream will be composed of biological sludge produced from secondary treatment where very limited traces of micro-pollution can be detected. Coupling of MAD and thermal conditioning (Thermal Hydrolysis Process - (THP) or Hydro Thermal Carbonization - (HTC)) of biological sludge will allow maximizing the production of biogas. Thanks to net-positive recovery of fatal heat from the furnace-for supplying heat and steam needed by thermal conditioning - export of biomethane is maximized. The ultimate dryness of the digested sludge achieved (30% dryness from THP; 65% dryness from HTC) from the pathogen free biosolids treatment line will allow sustainable biosolids reuse in agriculture, especially with HTC where no more organic polymer is used (polyacrylamides). This sludge stream will allow recovering phosphorus (struvite) and biosolids with the lowest concentration levels of micro-pollution for either use in agriculture, soil remediation or co-incineration (cement factory or municipal solid waste).

The concept of the invention of "divert, capture, recover" - applicable from 200,000 PE (People Equivalent) (and greater) plants - paves the way to coping with comprehensive CEC removal, sustainable biosolids reuse and maximized biogas reuse.

Therefore, a main objective of the invention is to selectively remove micro-contaminants from sludge. Another objective of the invention is to provide a selective management removal of micro-contaminants combined with energy efficiency and biogas reuse from sludge.

### BRIEF DESCRIPTION OF THE DRAWING

The accompanying drawings illustrate various non-limiting, exemplary, innovative aspects in accordance with the present description:
- Figure 1 schematically represents a block diagram with the steps of the method for selectively removing micro-contaminants from sludge according to the invention;
- Figure 2, Figure 3, Figure 4 schematically represent a block diagram with optional steps of the method for selectively removing micro- contaminants from sludge according to the invention;
- Figure 5 schematically represents a first embodiment of the installation for selectively removing micro- contaminants from sludge according to the invention.

### DETAILED DISCLOSURE

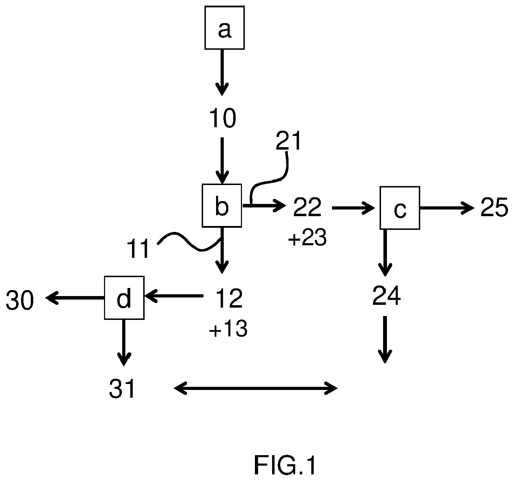

Figure 1 schematically represents a block diagram with the steps of the method for selectively removing micro- contaminants from sludge according to the invention. According to the invention, the method for selectively removing micro-contaminants from sludge, comprises a step (a) of providing wastewater 10 contaminated with micro-contaminants. Said wastewater 10 is subjected to a primary treatment step (b), thereby producing a first stream 11 of primary sludge 12 comprising a first part 13 of micro-contaminants and a second stream 21 of remaining wastewater 22 comprising a second part 23 of micro-contaminants. The method of the invention further comprises a step (c) of subjecting the second stream 21) of remaining wastewater 22 to a secondary treatment step, thereby producing biological sludge 24 and a liquid phase 25. Finally the method according to the invention comprises a step of subjecting the first stream 11 of primary sludge 12 to an incineration step (step (d)), thereby eliminating the primary sludge and the first part 13 of micro-contaminants and producing ashes 30 and heat 31.

The secondary treatment step is a biological treatment step. The biological treatment is a treatment in which micro-organisms intervene to decompose the matter in the remaining wastewater subjected to the biological treatment. Examples of biological treatments are aerobic bacteria oxidation or anoxic or anaerobic bacteria metabolism for carbonaceous, nitrogen or phosphorous removal.

Incineration includes any treatment enabling the transformation of organic matter into carbon dioxide and eventually in carbon. Incineration can also be a pyrolysis or a gasification. Incineration takes place in an incineration workshop having at least two outlets: one outlet is dedicated to the heat recovery and the other outlet is dedicated to ash recovery.

The incineration generally contains a dehydration step to mechanically remove as much water as possible before incineration. Since micro-contaminants are preferentially captured in the first stream 11, so are they in this dehydration step due to the same adsorption phenomena. When removing water from a stream, micro-contaminants remain with the sludge part and the removed water has a very low micro-contaminant concentration.

All the steps of dehydration and/or mechanical or gravitational thickening do not significantly modify the distribution of micro-contaminants which remain in the solid phase. The micro-contaminants present in the sludge phase remain in the dehydrated/thickened sludge.

It is to be noticed that the steps of digestion comprise a step of thickening, so that as little water as possible is introduced in the digester. In other words, even not shown in the figures for a better readability, upstream the digestion, there is a step of mechanical or gravitational thickening that does not modify the stream of micro-contaminants that remain in the solid matrix. Upstream the incineration and upstream the THP, there is a step of dehydration, that does not modify the stream of micro-contaminants either. The liquid fractions recovered from these steps of thickening and/or dehydration are returned at the inlet of the plant or to prior steps of the process. This stream of recovered liquid fractions is advantageously subjected to an additional specific treatment for destroying microcontaminants (more specifically micropollutants), such as an oxidation step. In any case, the concentration of microcontaminants into the recovered liquid fractions is of second order as compared to the incoming flow of wastewater 10. These liquids only circulate inside the wastewater treatment plant to exit through the usual flows. It is transparent in regards of the balance sheet of the wastewater treatment plant.

The method according to the invention is based on the segregation of the wastewater 10 contaminated with micro-contaminants upstream the incineration and only the primary sludge 12 is treated through incineration. Therefore, the incineration workshop burns only the primary sludge 12, that is to say the bad sludge containing most of the micro-contaminants (between 20 wt. % and 80 wt. % of the micro-contaminants of the wastewater depending on the sludge to be treated). The valuable sludge, that is to say the sludge full of nutrients suitable for biosolids reuse in soils, is not burnt and can be recovered and valued for further uses. Additionally, since only the primary sludge is directed to the incineration step (d), the incineration workshop can be of a smaller dimension as those used in the prior art that burn mixed sludge. The solution proposed by the invention is therefore less CAPEX intensive.

More precisely, the primary sludge is the result of particulate settling matter which settles very quickly and which is rather mineral matter, or inert organic matter. This primary sludge captures about 20 to 80 wt. %, and more often about 50 to 60 wt. %, of heavy metals and approximately 20 wt. % of pharmaceuticals from the wastewater contaminated with micro-contaminants. On the other hand, the biological sludge is a less particulate pollution. It is a mixture of particulate and soluble fractions biodegradable and not biodegradable in which the bacteria's converts the biodegradable dissolved pollution into CO2 or N2 by mineralization. The process results in a bacteria's growth and particulate matter accumulation that generates sludge production. The active biological sludge is maintained into the biological reactor at about 5 g/L, preferentially between 2 and 3 g/L. This quantity of biomass being in contact with the colloidal and dissolved solution generates a phenomenon of adsorption of micro-contaminants on the biomass that is biological sludge. Therefore it should be pointed out that the biological sludge is almost free of micro-contaminants but may still contain a small amount of micro-contaminants. That is why it may be necessary to further treat the biological sludge as explained below.

The invention enables to take into account two different adsorption mechanisms, each with a different kinetics. This means that the adsorption rates of the micro-contaminants on the sludge are different. The way to segregate the wastewater into two streams and each stream being intended to be submitted to its own treatment allows taking into account these differences. The invention allows the selective removal of micro-contaminants from sludge.

The invention represents a new approach of sludge incineration. Indeed, in the prior art, sludge incineration is based on large furnaces and incineration solutions (the bigger the better). When a sludge incineration solution is sold, the objective is to burn as much sludge as possible to secure the source of product and ensure the payback of the large infrastructure. Therefore, all developers of sludge incineration projects always burn as much sludge as possible i.e. 100% of the on-site production of sludge (say mixed sludge composed of primary sludge mixed with biological sludge i.e. "bad sludge" mixed with "good sludge") and more sludge imported from other WWTPs (mixed sludge).

On the contrary, the invention is focused on burning only the "bad sludge" (primary sludge), which reduces the size of the incineration workshop, the sizes of flue gas treatment and equipment, reduces CAPEX investment and eases permitting for the client (smaller capacity, easier permitting). Burning only primary sludge means 50% reduction in the quantity of sludge to be treated.

In other words, the invention performs a differential and selective treatment of sludge. The primary sludge is the bad sludge containing unwanted parts like heavy metals, pharmaceuticals, etc. This bad sludge is easy to separate and this separation enables to obtain biological sludge from the good sludge (issued from the remaining wastewater).

The first part 13 of micro-contaminants is usually greater than the second part 23 of micro-contaminant. Typical, and in a non-limitative example, the first part 13 of micro-contaminants is about 60 wt.% of the micro-contaminants of the wastewater 10 and the second part 23 of micro-contaminants is about 40 wt.% of the micro-contaminants of the wastewater 10.

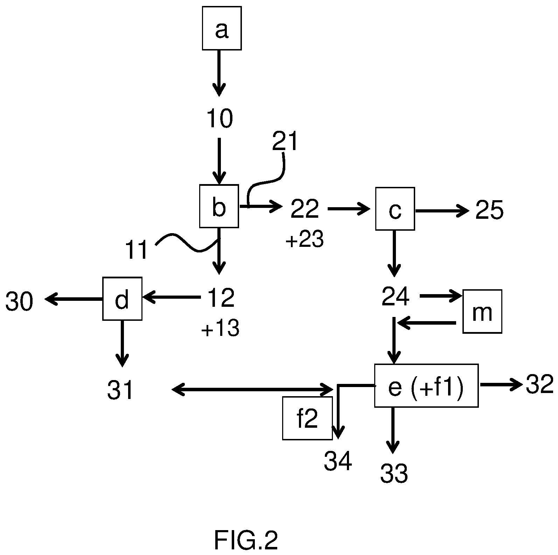

Figure 2, Figure 3, Figure 4 schematically represent a block diagram with optional steps of the method for selectively removing micro-contaminants from sludge according to the invention.

In the block diagram represented in Figure 2, the method according to the invention comprises an optional step of subjecting the biological sludge 24 to a thermal conditioning step e). The thermal conditioning of step e) may be a Hydro Thermal Carbonization (HTC) or a Thermal Hydrolysis Process (THP), or any other applicable thermal conditioning. This step is described in more details further below.

Advantageously, the method for selectively removing micro-contaminants from sludge according to the invention further comprises a step of providing the heat 31 produced during the incineration of the primary sludge 12 (step d) to the thermal conditioning step. The invention segregates the two types of sludge (primary sludge and biological sludge) and processes each type of sludge through a dedicated combination of processes. Following this, the invention allows the production of greener biosolids with lower micro-contaminants content for soils uses from biological sludge. Coupling this separated sludge treatment processes with the heat transfer from the incineration to the thermal conditioning has the advantage of a lower overall energy footprint thanks to the thermal conditioning fed with heat 31 recovered from incineration. Providing the heat 31 produced during the incineration of the primary sludge 12 to the thermal conditioning step enables to perform a selective removal of micro-contaminants from sludge combined with energy efficiency and biogas reuse from sludge.

The method according to the invention may comprise an optional step m) of oxidation treatment on the biological sludge 24 before thickening. This optional step enables to further decrease the concentration of micro-contaminants into the sludge that is intended to be part of a solid product to be spread.

The method according to the invention may comprise an optional step f1) of anaerobic digestion of the biological sludge 24, said anaerobic digestion being performed upstream or downstream the thermal conditioning, thereby producing methane 32 and a solid product 33.

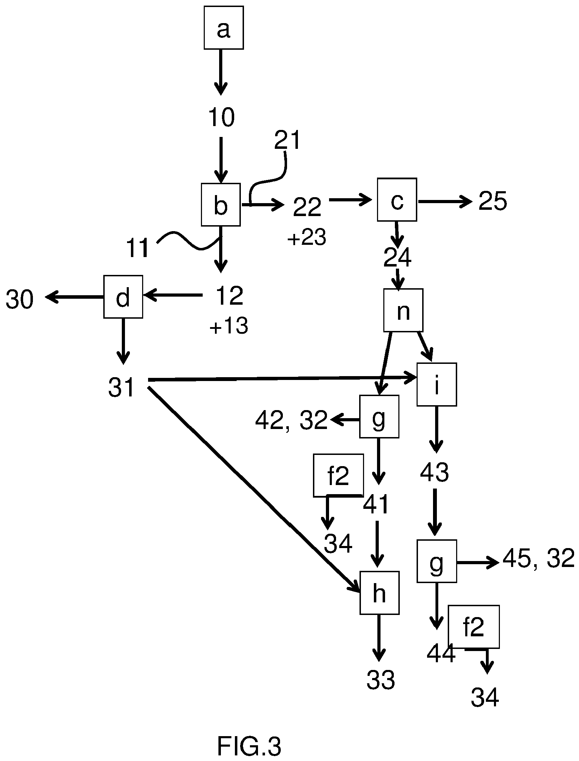

The method according to the invention may further comprise a step f2) of recovering nutrients 34 from the digested sludge after the step of anaerobic digestion. These steps are more detailed below based on Figure 3.

As depicted in Figure 3, the method according to the invention may further comprise a step n) of oxidizing the secondary sludge 24 before the step f1) of anaerobic digestion. Oxidizing the sludge 24 before being submitted to the anaerobic digestion enables to improve the sludge quality recoverable for spreading.

In the block diagram represented in Figure 3, the method according to the invention comprises the same steps of the method represented by the block diagram of Figure 2. Figure 3 details further the anaerobic digestion being performed upstream or downstream the thermal conditioning. The anaerobic digestion (previously generally mentioned as step f1)) may comprise a step g) of anaerobic digestion leading to a digestate 41 and a gaseous fraction 42 containing methane 32. In this case, the anaerobic digestion is followed by a step h) of thermal conditioning by Hydro Thermal Carbonization (HTC) of the digestate 41, thereby producing the solid product 33. In other words, in this embodiment, the anaerobic digestion (step f1) is an anaerobic digestion (step g) leading to a digestate 41 and a gaseous fraction 42 containing methane 32, and the step of thermal conditioning (step h) is performed downstream the anaerobic digestion (step f1), the thermal conditioning (step h) being an Hydro Thermal Carbonization (HTC), thereby producing the solid product 33.

The step of Hydrothermal carbonization (HTC) contributes to the destruction of micro-pollutants such as hydrophobic organic compounds pharmaceutical or endocrine disrupters for example.

Alternatively or in a parallel and complementary way, the thermal conditioning step may comprise a step i) of Thermal Hydrolysis Process (THP) thereby producing hydrolyzed sludge 43 followed by the anaerobic digestion being a step g) of anaerobic digestion of the hydrolyzed sludge 43, thereby producing a digestate 44 and a gaseous fraction 45 containing methane 32. In other words, in this embodiment, the thermal conditioning step is a Thermal Hydrolysis Process (THP) (step i), thereby producing hydrolyzed sludge 43, and the anaerobic digestion is performed downstream the THP, the anaerobic digestion being a anaerobic digestion (step g) of the hydrolyzed sludge 43, thereby producing a digestate 44 and a gaseous fraction 45 containing methane 32.

The step f) of nutrients 34 recovery from the digested sludge 41, 44 takes place after the step of anaerobic digestion.

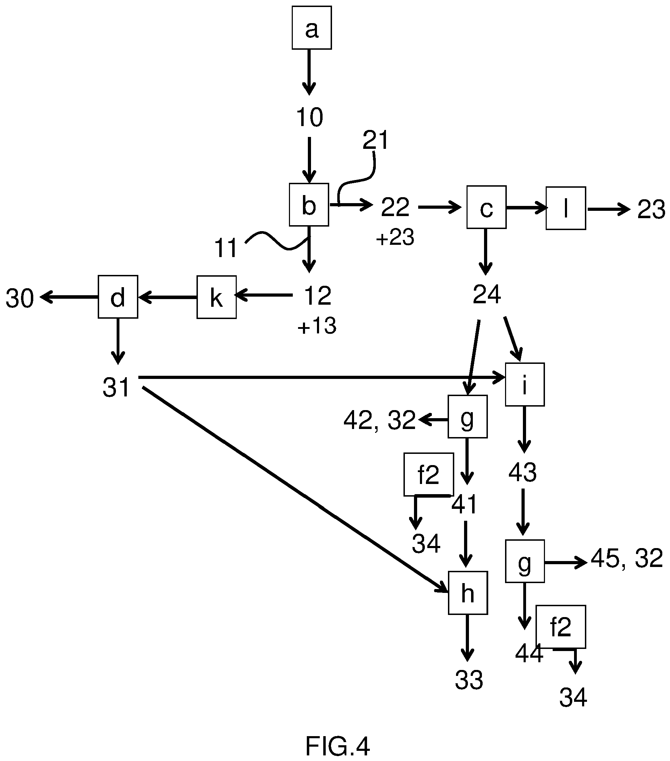

Figure 4 schematically represents a block diagram with optional steps of the method for selectively removing micro-contaminants from sludge according to the invention. In the block diagram represented in Figure 4, the method according to the invention comprises the same steps of the method represented by the block diagram of Figure 3. Figure 4 details further optional steps. As can be seen, the first stream 11 of primary sludge 12 may be subjected to an anaerobic treatment step k) prior to being subjected to the incineration (step d).

The method of the invention may comprise a step I) of stripping the second part 23 of micro-pollutant during the secondary treatment step c).

Stripping corresponds to the entrainment of gases or volatile products dissolved in water by the action of another gas, thereby carrying out a desorption. Typically stripping is adapted to sulfur and nitrogen products and some volatile organic materials (solvents, phenols, alcohols, etc.). In practice, stripping is carried out in contact towers where the water to be treated is spread in a counter-current of an extracting gas. The extracting gas may be air, but also steam or smoke gases.This step I) of stripping enables to extract the second part 23 of micro-pollutant to ensure a micro-pollutant free biological sludge 24. The step I) of stripping the second part 23 of micro-pollutant during the secondary treatment step c) is optional.

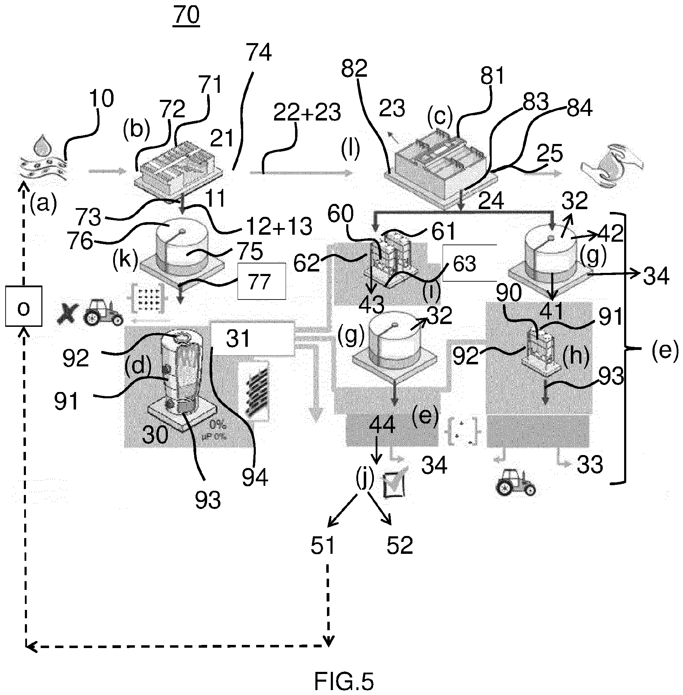

Figure 5 schematically represents an embodiment of the installation for selectively removing micro-contaminants from sludge according to the invention. As can be seen and further to the description of the method of the invention, the method of the invention may further comprise a step j) of separating the digestate 41, 44 of the step of anaerobic digestion into a liquid fraction 51 and a solid fraction 52. The solid product 33 from the HTC step and/or the solid fraction 52 from the step j) of separating the digestate 41, 44 is suitable for use as fertilizer, in particular as a fertilizer to be spread on land.

Figure 5 represents an installation 70 for selectively removing micro-contaminants from sludge. The installation 70 comprises a first tank 71 having a first inlet 72, a first outlet 73, and a second outlet 74. The first tank 71 is configured to be fed at the first inlet 72 with wastewater 10 contaminated with micro-contaminants. The first tank 71 is configured to produce a first stream 11 of primary sludge 12 comprising a first part 13 of micro-contaminants recovered at the first outlet 73, and a second stream 21 of remaining wastewater 22 comprising a second part 23 of micro-contaminants recovered at the second outlet 74. The installation 70 further comprises a biological tank 81, suitable for biological treatment, such as aerobic bacteria oxidation, anoxic or anaerobic bacteria metabolism, having a first inlet 82, and a first outlet 83 and a second outlet 84. The first inlet 82 is in fluid connection with the second outlet 74 of the first tank 71. The biological tank 81 is configured to be fed at the first inlet 82 with the second stream 21 of remaining wastewater 22 and to produce biological sludge 24 recovered at the first outlet 83 and a liquid phase 25 recovered at the second outlet 84. Finally the installation 70 comprises an incineration workshop 91 having a first inlet 92, a first outlet 93, and a second outlet 94. The first inlet 92 is in fluid connection with the first outlet 73 of the first tank 71. The incineration workshop 91 is configured to be fed at the first inlet 92 with the first stream 11 of primary sludge 12 and to eliminate the primary sludge and the first part 13 of micro-contaminants and to produce ashes 30 recovered at the first outlet 93 and heat 31 recovered at the second outlet 94. The incineration workshop 91 is suitable to perform any kind of combustion, pyrolysis, gasification, etc.

The incineration workshop 91 advantageously comprises any internal energy recovery system to minimize or eliminate fuel consumption required for the proper combustion of the primary sludge.

In another embodiment, the installation 70 may further comprise a thermal conditioner 60, 90 configured to be fed, directly or indirectly, with the biological sludge 24, as explained further below.

In an embodiment, the thermal conditioner 60 has a first inlet 61, a second inlet 62, and a first outlet 63. The first inlet 61 is in fluid connection with the first outlet 83 of the biological tank 81. The thermal conditioner 60 is configured to be fed at the first inlet 61 with biological sludge 24. The thermal conditioner 60 is suitable at least for a Thermal Hydrolysis Process (THP).

In another embodiment, the thermal conditioner 90 has a first inlet 91, a second inlet 92, and a first outlet 93. The thermal conditioner 90 is suitable at least for a Hydro Thermal Carbonization (HTC) or a Thermal Hydrolysis Process (THP). Preferably, the thermal conditioner 90 is suitable for Hydrothermal Carbonization (HTC). These two embodiments comprising a thermal conditioner are described below.

In another embodiment of the installation 70, the second outlet 94 of the incineration workshop 91 may be in fluid connection with the second inlet 62, 92 of the thermal conditioner 60, 90. The thermal conditioner 60, 90 is then further configured to be fed at the second inlet 62, 92 with the heat 31 recovered at the second outlet 94 of the incineration workshop 91. The fluid connection of the second inlet of the thermal conditioner with the second outlet of the incineration workshop enables to conduct the heat 31 produced in the incineration workshop during the incineration of the primary sludge 12 to the thermal conditioning. This leads to a selective removal of micro-contaminants from sludge combined with energy efficiency and biogas reuse from sludge.

As mentioned before, in an embodiment of the installation 70, the thermal conditioner 60 is a THP (Thermal Hydrolysis Process) reactor configured to produce hydrolyzed sludge 43 recovered at the outlet 63. The outlet 63 is in fluid connection with the inlet of the anaerobic tank downstream the THP reactor. The anaerobic tank is suitable for anaerobic digestion of the hydrolyzed sludge 43, thereby producing a digestate 44 and a gaseous fraction 45 containing methane 32. In this embodiment, the anaerobic digestion is performed downstream the THP conditioner 60, and the anaerobic digestion is an anaerobic digestion of the hydrolyzed sludge 43. Following this, a digestate 44 and a gaseous fraction 45 containing methane 32 are produced. In another embodiment of the installation 70, the thermal conditioner 90 is downstream an anaerobic tank suitable for anaerobic digestion leading to a digestate 41 and a gaseous fraction 42 containing methane 32. The outlet of the thermal conditioner 90 is in fluid connection with the inlet 91 of the thermal conditioner 90 being a HTC (Hydro Thermal Carbonization) reactor. The HTC reactor 90 is configured to be fed with the digestate 41 at the first inlet 91 and to produce hydrolyzed sludge 43 recovered at the outlet 93. In this embodiment, the anaerobic digestion is an anaerobic digestion leading to a digestate 41 and a gaseous fraction 42 containing methane 32. The thermal conditioner 90 is positioned downstream the anaerobic tank. Preferably, the thermal conditioner 90 is a Hydro Thermal Carbonization (HTC) reactor. Following this, a solid product 33 is produced.

In another embodiment of the invention, the installation may comprise an anaerobic digester 75 configured to be fed at its inlet 76 with the first stream 11 of primary sludge 12 upstream the incineration workshop 91. The digestate recovered at the outlet 77 of the digester 75 is fed to the first inlet 92 of the incineration workshop 91.

As mentioned before, the installation 70 may further comprise a recirculation loop configured to recirculate the liquid fractions produced within the installation (in particular the liquid fraction 51 produced by the anaerobic digestion). This liquid fraction may be returned directly to the wastewater treatment plant inlet. It may be returned to inlet works (together with wastewater 10) or may undergo before returning to plant inlet an oxidation treatment (advanced oxidation process: AOP) (step o) in order to remove dissolved organics micro-pollutants and to avoid concentrating micro-pollutants. It means that these centrates (under the form of biosolids/sludge) produced during the anaerobic digestion, with or without thermal conditioning (HTC or THP), can be directly returned to the plant inlet or undergo a specific treatment such as oxidation before returning to the wastewater treatment plant inlet.

The installation 70 may further comprise a device for recovering nutrients 34 from the digested sludge downstream the anaerobic tank.

The main principle of the invention relies on the sludge separation in the primary treatment step leading to a primary sludge and a remaining wastewater (further leading to biological sludge after the secondary treatment) and the incineration of the primary sludge. The main part of micro-pollutant is contained in the primary sludge. Therefore, the coupling of the sludge separation and the incineration of the primary sludge enables the destruction of micro-contaminants in the sludge. The invention consists in capturing, diverting and destroying a large part of micro-contaminants, at least about 60 wt. % of the wastewater.

The further use of excess heat from the incineration to the thermal conditioning enables to recover energy. In other words, the energy from the incineration is valued to boost the biogas production and biomethane exportation. Furthermore, the invention allows producing greener biosolids (i.e. having less than 20% micro-contaminants in content) for use in agriculture.

The benefits resulting from the invention are:
- Removal of the greatest portion of micro-contaminants from the water cycle through primary sludge coupled with sludge incineration (60%);
- Smaller incineration workshop i.e. less CAPEX intensive solution, which will ease the development of sludge incineration: burning only 50% of sludge (primary sludge = "bad sludge") compared to existing state-of-the-art treatment lines that burn 100% or 0% of the sludge through incineration in conventional treatment lines;
- Increased net biogas production thanks to the recovery of heat from the incineration;
- Production of greener biosolids from the thermal conditioning by means of diversion of micro-contaminants to the sludge incineration workshop.

Moreover, the secondary treatment of the remaining wastewater together with the anaerobic digestion of the biological sludge 24 performed upstream or downstream the thermal conditioning has additional advantages. It contributes to the production of greener biosolids from biological sludge only, that is to say not mixed with the primary sludge that is contaminated with micro-contaminants. This leads to the production of greener Class A biosolids for use in agriculture, silviculture, soil refurbishment, landscaping, households ... And as mentioned before, there is a boost energy recovery through biogas production and biomethane exportation from the thermal conditioning, thanks to the combination of the HTC process (low energy process) or HTP process with anaerobic digestion and incineration.

In order to illustrate the advantages of the method of the invention, material and energy balances of the method of the invention (entitled "invention" sector) and other sludge treatment sectors (incineration alone, digestion alone, digestion + incineration) were performed. The results are below:

| Lower calorific Value (LCV) | | | | |
|---|---|---|---|---|
| Sludge dry matter | | | | |
| 51.52 | Invention | Incineration | Digestion | Digestion + incineration |
| Biogaz energy | 22.18 | 0 | 15.67 | 21.64 |
| High temperature energy | 0.74 | 19.72 | 0 | 6.11 |
| Low temperature energy | 0.29 | 0 | 0 | 0 |
| Sludge LCV energy | 11.81 | 0 | 14.38 | 0.00 |
| Performance on Dry matter LCV | 68% | 38% | 58% | 54% |

We can notice that the method according to the invention is the best method in terms of performance on LCV.

When adding to each energy an (arbitrary) coefficient to take into account the "interest" of each energy produced, the comparison becomes

| ENERGETIC COEF | Invention | incineration | digestion | Digestion + incineration |
|---|---|---|---|---|
| 1 | 22.18 | 0.00 | 15.67 | 21.64 |
| 0.3 | 0.22 | 5.92 | 0.00 | 1.83 |
| 0.1 | 0.03 | 0.00 | 0.00 | 0.00 |
| 0.3 | 3.54 | 0.00 | 4.32 | 0.00 |
| | 25.97 | 5.92 | 19.99 | 23.48 |
| | 100% | 23% | 77% | 90% |

The same conclusion remains, even if the gap is reduced with the incineration digestion sector.

If we look in terms of "sizing of equipment":

| | Invention | Incineration | Digestion | Digestion + incineration |
|---|---|---|---|---|
| Sizing digester | 1 | 0 | 1.9 | 1.9 |
| Sizing incineration workshop | 1 | 3.1 | 0 | 1.6 |
| Sizing HTC | 1 | 0 | 0 | 0 |

The method of the invention therefore makes it possible to greatly reduce both the size of an incinerator (by nature very expensive) and the size of the digester. On the other hand it is necessary to add equipment (a little expensive) compared to the incineration digestion sector. And of course it is more expensive than a digestion alone.

The orders of quantities for the same quantity to be processed in terms of price are:
Incineration workshop: 1
Digester: 0.6
HTC: 0.4

Of course it is necessarily dependent-site but it shows that the incineration workshop should be reduced at all costs. The HTC is not very expensive. So in terms of selling price to treat micro-contaminants, the method of the invention emerges cheaper than the other sectors.

| | Invention | Incineration | Digestion | Digestion + incineration |
|---|---|---|---|---|
| Micro-pollutant destruction | + | ++ | - | ++ |
| valorization for agricultural purposes | + | -- | ++ | -- |
| DIVERT RECYCLE RECOVER | ++ | -- | + | 0 |

## Claims

1. A method for selectively removing micro-contaminants from sludge, said method comprising:
a) Providing wastewater (10) contaminated with micro-contaminants, and
b) Subjecting said wastewater (10) to a primary treatment step, thereby producing a first stream (11) of primary sludge (12) comprising a first part (13) of micro-contaminants and a second stream (21) of remaining wastewater (22) comprising a second part (23) of micro-contaminants,
c) Subjecting the second stream (21) of remaining wastewater (22) to a secondary treatment step, thereby producing biological sludge (24),
d) Subjecting the first stream (11) of primary sludge (12) to an incineration step, thereby eliminating the primary sludge and the first part (13) of micro-contaminants and producing ashes (30) and heat (31).

2. The method of claim 1, further comprising a step e) of subjecting the biological sludge (24) to a thermal conditioning step.

3. The method of claim 2, wherein the heat (31) produced in step d) is provided to the thermal conditioning step e).

4. The method of any of claims 1 to 3, wherein the first part (13) of micro-contaminants is greater than the second part (23) of micro-contaminants.

5. The method of any of claim 2 to 4, further comprising a step f1) of anaerobic digestion of the biological sludge (24), said anaerobic digestion being performed upstream or downstream the thermal conditioning, thereby producing methane (32) and a solid product (33).

6. The method of claim 5, further comprising a step f2) of recovering nutrients (34) from the digested sludge after the step of anaerobic digestion.

7. The method of claim 5 or 6, wherein the anaerobic digestion (step f1) is an anaerobic digestion (step g) leading to a digestate (41) and a gaseous fraction (42) containing methane (32), and the step of thermal conditioning (step h) is performed downstream the anaerobic digestion (step f1), the thermal conditioning (step h) being an Hydro Thermal Carbonization (HTC), thereby producing the solid product (33).

8. The method of claim 5 or 6, wherein the thermal conditioning step is a Thermal Hydrolysis Process (THP) (step i) thereby producing hydrolyzed sludge (43), and the anaerobic digestion is performed downstream the THP, the anaerobic digestion being an anaerobic digestion (step g) of the hydrolyzed sludge (43), thereby producing a digestate (44) and a gaseous fraction (45) containing methane (32).

9. The method of claim 7 or 8, further comprising a step j) of separating the digestate (41, 44) of the step g) into a liquid fraction (51) and a solid fraction (52).

10. The method of claim 7 or 9, wherein the solid product (33) from the HTC step and/or the solid fraction (52) from the step j) is suitable for use as fertilizer, in particular as a fertilizer to be spread on land.

11. The method of any of claims 1 to 10, wherein the first stream (11) of primary sludge (12) is subjected to an anaerobic treatment step k) prior to being subjected to step d).

12. The method of any of claims 5 to 11, comprising a step n) of oxidizing the secondary sludge (24) before the step f1) of anaerobic digestion.

13. An installation (70) for selectively removing micro-contaminants from sludge, said installation comprising:
a) A first tank (71) having a first inlet (72), a first outlet (73) and a second outlet (74), the first tank (71) being configured to be fed at the first inlet (72) with wastewater (10) contaminated with micro-contaminants and to produce:
a. a first stream (11) of primary sludge (12) comprising a first part (13) of micro-contaminants recovered at the first outlet (73);
b. a second stream (21) of remaining wastewater (22) comprising a second part (23) of micro-contaminants recovered at the second outlet (74);
b) a biological tank (81), suitable for aerobic bacteria oxidation, anoxic or anaerobic bacteria metabolism, having a first inlet (82), and a first outlet (83), the first inlet (82) being in fluid connection with the second outlet (74) of the first tank (71), the biological tank (81) being configured to be fed at the first inlet (82) with the second stream (21) of remaining wastewater (22) and to produce biological sludge (24) recovered at the first outlet (83);
c) an incineration workshop (91) having a first inlet (92), a first outlet (93) and a second outlet (94), the first inlet (92) being in fluid connection with the first outlet (73) of the first tank (71), the incineration workshop (91) being configured to be fed at the first inlet (92) with the first stream (11) of primary sludge (12) and to eliminate the primary sludge and the first part (13) of micro-contaminants and to produce ashes (30) recovered at the first outlet (93) and heat (31) recovered at the second outlet (94).

14. The installation (70) of claim 13, further comprising a thermal conditioner (60, 90) having a first inlet (61, 91), a second inlet (62, 92) and a first outlet (63, 93), the first inlet (61, 91) being in fluid connection with the first outlet (83) of the biological tank (81), the thermal conditioner (60, 90) being configured to be fed at the first inlet (61, 91) with biological sludge (24), the thermal conditioner (60, 90) being suitable at least for a Hydro Thermal Carbonization (HTC) or a Thermal Hydrolysis Process (THP).

15. The installation (70) of claim 14, wherein the second outlet (94) of the incineration workshop (91) is in fluid connection with the second inlet (62, 92) of the thermal conditioner (60, 90), the thermal conditioner (60, 90) being further configured to be fed at the second inlet (62, 92) with the heat (31) recovered at the second outlet (94) of the incineration workshop (91).
